## Europäisches Patentamt
## European Patent Office
## Office européen des brevets

(19)

(11) Numéro de publication: **0 047 702 B1**

(12)

# FASCICULE DE BREVET EUROPEEN

(45) Date de publication du fascicule du brevet:
**15.02.84**

(51) Int. Cl.³: **B 60 T 11/10,** B 62 D 11/08

(21) Numéro de dépôt: **81401382.7**

(22) Date de dépôt: **04.09.81**

(54) **Distributeur pour système de freinage de véhicule, notamment pour véhicule à usage agricole.**

(30) Priorité: **04.09.80 IT 2444980**

(43) Date de publication de la demande:
**17.03.82 Bulletin 82/11**

(45) Mention de la délivrance du brevet:
**15.02.84 Bulletin 84/7**

(84) Etats contractants désignés:
**DE FR GB SE**

(56) Documents cités:
**AT - B - 288 172**
**DE - A - 2 059 037**
**DE - B - 2 116 311**
**FR - A - 1 382 598**

(73) Titulaire: **BENDITALIA S.p.A., Via Cavalli 53/A,
I-26013 Crema (IT)**

(72) Inventeur: **Cadeddu, Leonardo, Via Piacenza 29/A,
I-26013 Crema (IT)**

(74) Mandataire: **Le Moenner, Gabriel et al, SERVICE
BREVETS BENDIX 44, Rue François 1er, F-75008 Paris
(FR)**

## Distributeur pour système de freinage de véhicule, notamment pour véhicule à usage agricole

La présente invention concerne un distributeur pour système de freinage de véhicule.

Dans certains véhicules, notamment à usage agricole, il est courant de prévoir deux maître-cylindres de freinage indépendants, l'un desservant un moteur de frein associé à la roue arrière droite du véhicule et l'autre desservant un moteur de frein associé à la roue arrière gauche du véhicule, les deux maître-cylindres pouvant être sollicités séparément pour procurer une assistance aux changements de direction du véhicule ou simultanément pour assurer le freinage proprement dit du véhicule. Dans ce dernier cas, afin d'équilibrer les efforts de freinage, on prévoit l'accouplement des deux pédales des deux maître-cylindres.

Lorsque le véhicule comporte également une paire de moteurs de freins associés aux roues avant, ou encore une paire de moteurs de freins associés aux roues d'une remorque, il y a lieu de différencier, en ce qui concerne cette paire de moteurs de freins, les actions de freinage de «ralentissement», lors desquelles tous les moteurs de freins du véhicule (et, éventuellement, de la remorque) doivent être alimentés en fluide sous pression, des actions de freinage «directionnelles», lors desquelles seul l'un des moteurs de freins des roues arrières du véhicule doit être alimenté en fluide sous pression.

A cet effet, il est connu d'incorporer au système de freinage du véhicule un distributeur relié d'une part aux deux maître-cylindres et d'autre part aux moteurs de freins de ladite paire, ledit distributeur ne permettant l'admission de fluide sous pression auxdits moteurs de ladite paire que lors d'un actionnement simultané desdits maître-cylindres.

On connaît de la demande de brevet allemand No DE OS 2 059 037, un distributeur assurant cette fonction. Néanmoins, ce distributeur présente l'inconvénient suivant: les deux moteurs de freins constituant ladite paire sont alimentés ensemble depuis un seul de deux maître-cylindres, ce qui rend nécessaire de prévoir un ensemble égalisateur à intercommunication de fluide entre les deux maître-cylindres. En effet, il n'est pas possible de prévoir un simple accouplement entre les deux pédales car dans ce cas, les deux maître-cylindres desserviraient des circuits trop dissymétriques.

Outre la complexité des maître-cylindres qui résulte de cette disposition, on remarque également qu'elle présente un grave danger en cas de rupture de l'un ou l'autre des circuits puisque le système de freinage peut alors se vider intégralement.

Dans le but de pallier des inconvénients, la présente invention propose un distributeur pour système de freinage d'un véhicule comprenant: une paire de maître-cylindres à commande séparée reliés l'un à un moteur de frein associé à une roue située à droite du véhicule et l'autre à un moteur de frein associé à une roue située à gauche du véhicule, une paire de moteurs de freins associés à des roues situées à droite et à gauche du véhicule et un distributeur relié d'une part à ladite paire de maître-cylindres et d'autre part à ladite paire de moteurs de freins, ledit distributeur ne permettant l'admission de fluide sous pression auxdits moteurs de ladite paire que lors d'un actionnement simultané desdits maître-cylindres (caractéristiques connues du brevet DE precité), ledit distributeur étant caractérisé en ce qu'il comprend une paire de valves identiques comprenant chacune: un orifice d'entrée relié à l'un des maître-cylindres, un orifice de sortie relié à l'un des moteurs de ladite paire, un siège de valve entre lesdits orifices et un élément de fermeture mobile normalement éloigné dudit siège d'une distance donnée et sensible à une faible pression audit orifice d'entrée pour venir en contact avec ledit siège, ledit distributeur comprenant une liaison mécanique entre les éléments de fermeture des deux valves, sur laquelle ces éléments de fermeture agissent de manière antagoniste, ladite liaison mécanique comportant une course morte supérieure à ladite distance donnée et inférieure au double de cette même distance donnée.

L'invention sera maintenant décrite en se référant aux dessins annexés, dans lesquels:

– La figure 1 est une représentation schématique d'un système de freinage incorporant un distributeur selon l'invention;

– la figure 2 est une vue en coupe d'un premier mode de réalisation d'un distributeur selon l'invention, et

– la figure 3 est une vue en coupe d'un second mode de réalisation d'un distributeur selon l'invention.

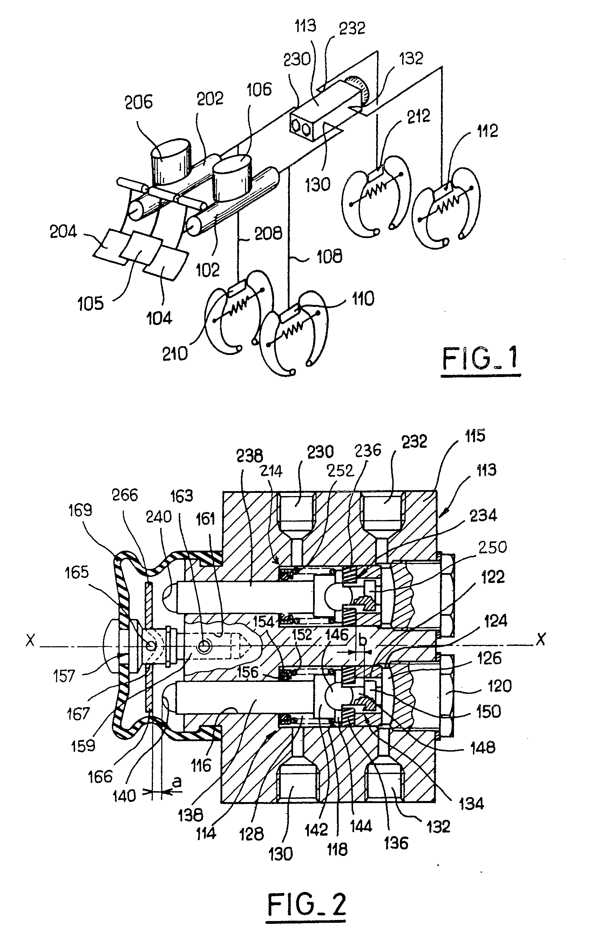

Le système de freinage représenté schématiquement à la figure 1 se compose d'une paire de maître-cylindres 102 et 202 qui peuvent être actionnés soit séparément au moyen de deux pédales 104 et 204 respectivement, soit ensemble au moyen d'une pédale d'accouplement 105. Chaque maître-cylindre comporte un réservoir 106–206, comme bien connu. La maître-cylindre 106 est relié par un conduit 108 à un moteur de frein 110 associé à la roue arrière droite du véhicule, et, de la même manière, la maître-cylindre 206 est relié par un conduit 208 à un moteur de frein 210 associé à la roue arrière gauche du véhicule. Le véhicule comporte en outre une paire de moteurs de freins 112 et 212 associés respectivement à la roue avant droite et à la roue avant gauche. Un distributeur de fluide 113 est relié d'une part aux deux maître-cylindres 102 et 202 et d'autre part aux deux moteurs de freins 112 et 212, la structure et la fonction de ce distributeur faisant l'objet de la description qui va suivre.

La figure 2 est une vue en coupe partielle d'un premier mode de réalisation d'un distributeur selon l'invention.

Le distributeur 113 comprend un boîtier 115 symétrique par rapport à un axe XX, et seuls les éléments situés d'un côté de cet axe seront décrits, les autres portant les mêmes numéros de référence, augmentés de 100.

Le boîtier comporte un alésage étagé 114 formé d'une partie de petit diamètre 116 et d'une partie de grand diamètre 118, cette dernière étant obturée au moyen d'un bouchon 120. Comme représenté, le bouchon comporte un évidement axial cylindrique 122 et une gorge périphérique 124, reliés par un passage 126. La partie d'alésage 118 et le bouchon 120 définissent une cavité 128 dans laquelle débouchent un orifice d'entrée 130, au voisinage du fond de cet alésage, et un orifice de sortie 132, au niveau de la gorge 124 du bouchon 120. Dans la cavité 128 est montée une valve 134 de la manière suivante: un siège de valve annulaire 136, réalisé en matériau élastomère, est monté de manière étanche dans l'alésage 118 et en contact avec l'extrémité du bouchon 120. Un piston 138 est monté coulissant de manière étanche dans la partie d'alésage 116 et se projette à l'une de ses extrémités 140 à l'extérieur du boîtier et à l'autre extrémité 142 dans la cavité 128. Cette dernière extrémité se compose d'une bride radiale 144, dans laquelle sont ménagées des échancrures axiales 146, d'une partie rétrécie 148 et d'une partie élargie formant obturateur de valve 150, dont le diamètre est égal du diamètre de la partie d'alésage 116 et inférieur à celui de l'évidement 122. On notera que le siège de valve 136 a un diamètre interne supérieur au diamètre de la partie rétrécie 148 du piston et inférieur au diamètre de l'obturateur de valve 150. Enfin, un ressort de rappel 152 repousse le piston 138 en appui contre le bouchon 120, définissant ainsi une position dite de repos dans laquelle l'obturateur de valve 150 est éloigné du siège de valve 136 d'une distance b. Comme représenté, le ressort 152 prend appui d'une part sur la bride 144 et d'autre part sur une cage annulaire 154 entourant le piston 138 et emprisonnant un joint 156 assurant l'étanchéité entre le piston 138 et la partie d'alésage 116.

Face aux extrémités 140 et 240 des pistons 138 et 238 le distributeur comprend une liaison mécanique 157. Celle-ci comprend un plongeur 159 introduit dans un perçage 161 du boîtier coaxialement à l'axe XX et bloqué en position par une vis pointeau 163. Un pivot 165 est fixé perpendiculairement au plongeur 159 et un fléau 167 est monté pivotant autour du pivot 165. Ce fléau comprend deux bras 166 et 266 qui sont séparés, au repos, de chacun des pistons 138 et 238 par une distance a. Le double de cette distance, soit 2a, sera appelé par la suite course morte de la liaison mécanique 157. Un capuchon 169 monté entre le boîtier et le plongeur 159 protège la liaison mécanique 157 contre les agents extérieurs.

Les distances a et b sont choisies de manière à vérifier la relation: $a < b < 2a$, pour des raisons qui seront expliquées plus loin.

Le distributeur 113 est monté sur le véhicule et raccordé aux autres organes du système de freinage: les maître-cylindres 102 et 202 étant reliés respectivement aux orifices d'entrée 130 et 230 et les moteurs de frein 112 et 212 étant reliés respectivement aux orifices de sortie 132 et 232 (figure 1). Lors de diverses actions de freinage, le distributeur 113 fonctionne de la manière suivante:

– En cas de freinage «directionnel», par exemple par actionnement du maître-cylindre 102 seul, au moyen de la pédale 104, la pression engendrée dans ce maître-cylindre est transmise d'une part au moteur de frein 110 pour assurer le freinage de la roue arrière droite du véhicule, et d'autre part à l'orifice d'entrée 130 du distributeur 113. Dès que cette pression atteint une faible valeur, le ressort 152 étant déterminé en conséquence, le piston 138 se déplace vers l'extérieur du boîtier. Dès que l'amplitude du déplacement du piston 138 atteint la valeur «b», l'obturateur de valve 150 vient en contact avec le siège 136, interrompant ainsi la liaison avec le moteur de frein 112 de la roue avant droite du véhicule. On remarquera que la liaison mécanique 157 permet un tel déplacement du piston 138. En effet, la distance b étant supérieure à la distance a, l'extrémité 140 du piston 138 vient repousser le bras 166 du fléau 167, cependant que l'autre bras 266 du fléau ne peut venir au contact de l'extrémité 240 du piston 238 puisque cette même distance b est inférieure à la course morte 2a. La valve 134 étant ainsi fermée, la pression régnant à l'orifice de sortie 132 et transmise au moteur de frein avant droit 112 restera égale à la faible valeur mentionnée ci-avant, et qu'on choisira de manière à rester en dessous du seuil d'actionnement du frein en question, quelque soit la pression engendrée dans le maître-cylindre 102.

En résumé, l'actionnement du maître-cylindre 102 seul provoque le seul freinage de la roue arrière droite du véhicule.

Réciproquement, l'actionnement du maître-cylindre 202 seul provoque le seul freinage de la roue arrière gauche du véhicule.

– En cas de freinage «de ralentissement», par actionnement simultané des deux pedales 104 et 204, ou, mieux, par actionnement de la pédale d'accouplement 105, les deux maître-cylindres délivrent du fluide sous pression d'une part aux moteurs de frein 110 et 210 pour assurer le freinage simultané des deux roues arrière du véhicule, et d'autre part aux deux orifices d'entrée 130 et 230 du distributeur 113. Les deux pistons sont alors repoussés vers l'extérieur du boîtier. Dans ce déplacement, chacun des deux pistons 138, 238 vient en butée avec le bras 166, 266 du fléau qui lui correspond et s'immobilise dans cette position. Puisque les deux pistons ne se sont déplacés que d'une distance a, inférieure à b, les deux valves 134 et 234 restent ouvertes et le fluide sous pression délivré par les maître-cylindres 102 et 202 est également admis aux moteurs de frein des roues avant 112 et 212 respectivement.

En résumé, l'actionnement simultané des deux maître-cylindres 102 et 202 provoque le freinage des quatre roues du véhicule.

On notera que ce freinage des quatre roues du véhicule peut être également obtenu à la suite d'un freinage directionnel en actionnant simplement la seconde pédale, soit directement, soit par l'intermédiaire de la pédale d'accouplement.

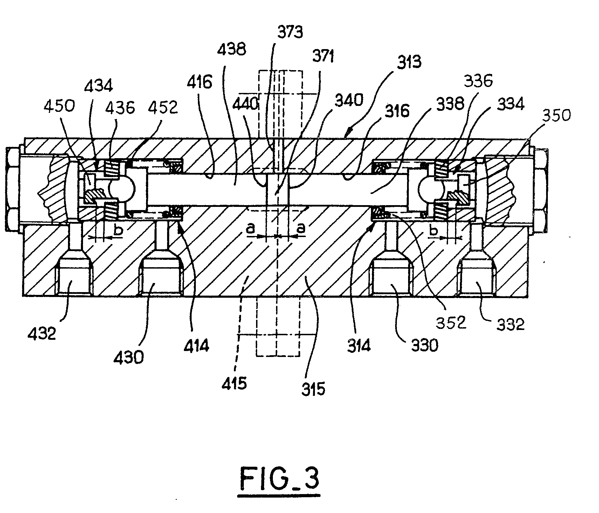

Le mode de réalisation du distributeur illustré à la figure 3 comprend un grand nombre d'éléments identiques à ceux du mode de réalisation déjà décrit, et auxquels il sera affecté la même référence, augmenté de la valeur 200.

Le distrubuteur 313 comprend un boîtier 315, qui peut, comme représenté par le tracé en pointillé, être réalisé en deux parties 315 et 415 fixées l'une à l'autre par tout moyen convenable. Dans ce mode de réalisation, les alésages 314 et 414 sont coaxiaux, les parties d'alésage 316 et 416 formant un alésage unique. La liaison mécanique avec course morte «2a» est ici simplement réalisée par le fait que les extrémités 340 et 440 des pistons 338 et 438 sont séparées au repos par une distance égale à «2a». L'espace 371 compris entre les deux pistons est relié à l'atmosphère par un conduit 373.

La description du fonctionnement du distributeur 313 ne sera pas reprise en détail. On remarquera seulement que lors d'un freinage «directionnel», par exemple au moyen du maître-cylindre 102, le piston 338 est libre de se déplacer en direction du piston 438 jusqu'à la fermeture de la valve 334, tandis que lors d'un freinage «de ralentissement», les deux pistons se déplacent l'un vers l'autre, jusqu'au contact mutuel, d'une distance a, sans provoquer la fermeture des valves 334 et 434.

Dans ce qui précède, il a été supposé que lors d'un actionnement des deux maître-cylindres 102 et 202 au moyen de la pédale d'accouplement 105, les pressions engendrées présentent une différence très faible de sorte que lors d'un freinage «normal», les freins du véhicule sont tous alimentés sensiblement à la même pression, le véhicule restant par conséquent stable sur sa trajectoire. Au cas où cette différence de pression s'avèrerait trop importante et que la stabilité du véhicule s'en trouverait compromise, il y aura lieu de prévoir un équilibreur de pression entre les deux maître-cylindres, comme bien connu dans la technique.

**Revendications**

1. Distributeur pour système de freinage d'un véhicule comprenant: une paire de maître-cylindres (102, 202) à commande séparée reliés l'un à un moteur de frein (110) associé à une roue située à droite du véhicule et l'autre à un moteur de frein (210) associé à une roue située à gauche du véhicule, une paire de moteurs de freins (112, 212) associés à des roues situées à droite et à gauche du véhicule et un distributeur (113, 313) relié d'une part à ladite paire de maître-cylindres (102, 202) et d'autre part à ladite paire de moteurs de freins (112, 212), ledit distributeur ne permettant l'admission de fluide sous pression auxdits moteurs de ladite paire que lors d'un actionnement simultané desdits maître-cylindres, ledit distributeur étant caractérisé en ce qu'il comprend une paire de valves identiques (134, 234; 334, 434) comprenant chacune: un orifice d'entrée (130, 230; 330, 430) relié à l'un des maître-cylindres, un orifice de sortie (132, 232; 332, 432) relié à l'un des moteurs de ladite paire, un siège de valve (136, 236; 336, 436) entre lesdits orifices et un élément de fermeture mobile (150, 250; 350, 450) normalement éloigné dudit siège d'une distance donnée (b) et sensible à une faible pression audit orifice d'entrée pour venir en contact avec ledit siège, ledit distributeur comprenant une liaison mécanique (138, 238, 157; 338, 438) entre les éléments de fermeture des deux valves sur laquelle ces éléments de fermeture agissent de manière antagoniste, ladite liaison mécanique comportant une course morte (2a) supérieure à ladite distance donnée (b) et inférieure au double de cette même distance donnée.

2. Distributeur selon la revendication 1, caractérisé en ce que chacune desdites valves comprend un boîtier dans lequel est définie une cavité (114, 214; 314, 414), lesdits orifices d'entrée et de sortie débouchant dans ladite cavité, ledit élément de fermeture étant porté par un piston (138, 238; 338, 438) monté coulissant de manière étanche au travers d'une paroi de ladite cavité et dont une extrémité se projette à l'extérieur dudit boîtier, les boîtiers des deux valves étant fixés l'un à l'autre.

3. Distributeur selon la revendication 2, caractérisé en ce que les deux boîtiers sont définis dans un élément unique (115; 315).

4. Distributeur selon l'une ou l'autre des revendications 2 ou 3, caractérisé en ce que chaque piston est sollicité vers l'intérieur du boîtier correspondant par un ressort de rappel (152, 252; 352, 452).

5. Distributeur selon l'une quelconque des revendications 2 à 4, caractérisé en ce que les deux pistons (338, 438) sont coaxiaux, leurs extrémités étant montées face à face et séparées d'une distance égale à ladite course morte (2a).

6. Distributeur selon l'une quelconque des revendications 2 à 4, caractérisé en ce que les deux pistons (138, 238) sont parallèles et définissent entre eux un axe de symétrie, leurs extrémités se projetant dans une même direction, ladite liaison mécanique (157) comprenant un fléau (167) à deux bras symétriques (166, 266) articulé autour d'un pivot (165) perpendiculaire audit axe de symétrie, les extrémités desdits pistons étant éloignées desdits bras d'une distance, mesurée parallèlement audit axe, égale à la moitié de ladite course morte.

7. Distributeur selon la revendication 6, caractérisé en ce que la position axiale dudit pivot (165) est réglable.

8. Distributeur selon la revendication 7, prise en combinaison avec la revendication 3, caractérisé en ce que ledit élément unique comporte un perçage (161) coaxial audit axe de symétrie, ledit pivot étant fixé perpendiculairement à un plongeur (159) monté coulissant dans ledit perçage, ledit plongeur étant bloqué en position par une vis pointeau (163).

9. Distributeur selon l'une quelconque des revendications 2 à 8, caractérisé en ce que lesdits éléments de fermeture (150, 250; 350, 450) ont une section égale à celle desdits pistons (138, 238; 338, 438) sur lesquels sont portés ces éléments de fermeture.

## Patentansprüche

1. Verteiler für die Bremsanlage eines Fahrzeuges mit einem Paar getrennt gesteuerter Hauptbremszylinder (102, 202), von denen der eine mit einer einem rechtsseitig angeordneten Rad zugeordneten Bremsbetätigungsvorrichtung (110) verbunden ist und der andere mit einer einem linksseitig angeordneten Rad zugeordneten Bremsbetätigungsvorrichtung (210) verbunden ist, einem Paar Bremsbetätigungsvorrichtungen (112, 212), die rechtsseitig und linksseitig angeordneten Rädern zugeordnet sind und einem Verteiler (113, 313), der einerseits mit dem besagten Paar Hauptbremszylinder (102, 202) und andererseits mit dem besagten Paar Bremsbetätigungsvorrichtungen (112, 212) verbunden ist, wobei der Verteiler eine Druckmittelzufuhr zu den Bremsbetätigungsvorrichtungen des besagten Paares nur bei einer gleichzeitigen Betätigung der Hauptbremszylinder zulässt, dadurch gekennzeichnet, dass der Verteiler zwei identische Ventile (134, 234; 334, 434) aufweist, die jeweils eine mit einem der Hauptbremszylinder verbundene Einlassöffnung (130, 230; 330, 430), eine mit einem der Bremsbetätigungsvorrichtungen des besagten Paares verbundenen Auslassöffnung (132, 232; 332, 432), einen Ventilsitz (136, 236; 336, 436) zwischen diesen Öffnungen und ein bewegliches Schliesselement (150, 250; 350, 450) aufweist, das normalerweise einen vorgegebenen Abstand (b) von dem Ventilsitz hat und in Abhängigkeit von einem schwachen Druck in der Einlassöffnung in Anlage mit dem Ventilsitz bewegbar ist, wobei der Verteiler eine mechanische Verbindung (138, 238, 157; 338, 438) zwischen den Schliesselementen der beiden Ventile besitzt, auf die die Schliesselemente in entgegengesetztem Sinn einwirken, wobei die mechanische Verbindung einen Totgang (2a) besitzt, der grösser ist als der vorgegebene Abstand (b) und kleiner als das Zweifache des vorgegebenen Abstandes.

2. Verteiler nach Anspruch 1, dadurch gekennzeichnet, dass jedes der Ventile ein Gehäuse aufweist, in dem eine Kammer (114, 214; 314, 414) gebildet ist, wobei die Einlass- und Auslassöffnungen in diese Kammer münden, dass das Schliesselement von einem Kolben (138, 238; 338, 438) getragen wird, der sich gleitend und abgedichtet durch eine Wand der Kammer erstreckt und ein Ende aus dem Gehäuse vorsteht, und dass die Gehäuse der beiden Ventile aneinander befestigt sind.

3. Verteiler nach Anspruch 2, dadurch gekennzeichnet, dass die beiden Gehäuse in einem gemeinsamen Bauteil (115, 315) gebildet sind.

4. Verteiler nach Anspruch 2 oder 3, dadurch gekennzeichnet, dass jeder Kolben in Richtung auf das Innere des zugehörigen Gehäuses durch eine Rückholfeder (152, 252; 352, 452) vorgespannt ist.

5. Verteiler nach einem der Ansprüche 2 bis 4, dadurch gekennzeichnet, dass die beiden Kolben (338, 438) koaxial angeordnet sind, wobei ihre Enden einander zugewandt sind und einen Abstand voneinander haben, der gleich dem Totgang (2a) ist.

6. Verteiler nach einem der Ansprüche 2 bis 4, dadurch gekennzeichnet, dass die beiden Kolben (138, 238) parallel verlaufen und zwischen sich eine Symmetrieachse definieren, wobei ihre Enden in der gleichen Richtung vorstehen, dass die mechanische Verbindung (157) einen mit zwei symmetrischen Armen (166, 266) versehenen Hebel (167) aufweist, der um eine zur Symmetrieachse senkrechte Gelenkachse (165) drehbar ist, und dass die Enden der Kolben von diesen Armen einen Abstand haben, der, gemessen parallel zur Symmetrieachse, gleich der Hälfte des Totganges ist.

7. Verteiler nach Anspruch 6, dadurch gekennzeichnet, dass die axiale Lage der Gelenkachse (165) regelbar ist.

8. Verteiler nach Anspruch 7 in Verbindung mit Anspruch 3, dadurch gekennzeichnet, dass das gemeinsame Bauteil eine zur Symmetrieachse koaxiale Bohrung (161) aufweist, dass die Gelenkachse senkrecht zu einem Plungerkolben (159) festgelegt ist, der in der Bohrung gleitend gelagert ist, und dass der Plungerkolben durch eine zugespitzte Schraube (163) lagefixiert ist.

9. Verteiler nach einem der Ansprüche 2 bis 8, dadurch gekennzeichnet, dass die Schliesselemente (150, 250; 350, 450) einen Querschnitt haben, der gleich dem der Kolben (138, 238; 338, 438) ist, von denen die Schliesselemente getragen werden.

## Claims

1. A distributor for a brake system of a vehicle comprising a pair of master cylinders (102, 202) controllable separately, one of said master cylinders being connected to a brake motor (110) associated to a wheel at the right side of the vehicle and the other master cylinders being connected to a brake motor (210) associated to a wheel at the left side of the vehicle, a pair of brake motors (112, 212) associated to wheels situated at the right and at the left of the vehicle, and a distributor (113, 313) connected at one side to said pair of master cylinders (102, 202) and at the other side to said pair of brake motors (112, 212), said distributor permitting admission of fluid under pressure to said motors of said pair only upon a simultaneous actuation of said master cylinders, said distributor being characterized in that it comprises a pair of identical valves (134, 234; 334, 434) each comprising an inlet orifice (130, 230, 330, 430) connected to one of the master cylinders, an outlet orifice (132, 232; 332, 432) connected to one of the motors of said pair, a valve seat (136, 236; 336, 436) between said orifices, and a movable closure element (150, 250; 350, 450) normally spaced from said seat by a predetermined distance (b) and responsive to a small pressure at the inlet orifice to engage said seat, the distributor comprising a mechanical connection (138, 238, 157; 338, 438) between the closure elements of the two valves upon which said closure elements act in opposite directions, said mechanical linkage having a lost motion (2a) the length of which is greater than said predetermined distance (b) and smaller than twice of said predetermined distance.

2. The distributor of claim 1 characterized in that each of said valves comprises a casing which defines a cavity (114, 214; 314, 414), said inlet and outlet orifices opening into said cavity, said closure element being supported by a piston (138, 238, 338, 438) slidingly mounted in a fluid tight manner to extend through one wall of said cavity and having an extremity projecting outwards of said casing, the casings of the two valves being fixed to one another.

3. The distributor of claim 2 characterized in that the two casings are defined in a common element (115, 315).

4. The distributor of either claim 2 or claim 3 characterized in that each piston is biased towards the interior of the corresponding casing by a return spring (152, 252; 352, 452).

5. The distributor of any of claims 2 to 4 characterized in that the two pistons (338, 438) are coaxial, their extremities being mounted face to face and being separated by a distance equal to the length of said lost motion (2a).

6. The distributor of any of claims 2 to 4 characterized in that the two pistons (138, 238) are parallel and define between them an axis of symmetry, their extremities extending in a same direction, said mechanical connection (157) comprising a lever (167) having a pair of symmetrical arms (166, 266), said lever being articulated about a pivot (165) being perpendicular to said axis of symmetry, the extremities of said pistons being spaced from said arms by a distance, measured parallel to said axis, equal to half of the length of said lost motion.

7. The distributor of claim 6 characterized in that the axial position of said pivot (165) is controllable.

8. The distributor claim 7 in connection with claim 3 characterized in that said common element comprises a bore (161) coaxial to said axis of symmetry, said pivot being fixed perpendicularly to a plunger (159) slidingly mounted in said bore, said plunger being fixed in position by a pointed screw (163).

9. The distributor of any of claims 2 to 8 characterized in that said closure elements (150, 250, 350, 450) have a section equal to that of said pistons (138, 238; 338, 438) upon which are supported said closure elements.

FIG_1

FIG_2

## FIG_3